# EUROPEAN PATENT APPLICATION

(11) **EP 4 418 369 A1**
(43) Date of publication of application: **21.08.2024**
(21) Application number: 23875913.8
(22) Date of filing: 05.06.2023
(51) Int. Cl.: H01M 4/62, H01M 10/0525, C08F 220/18, C08F 220/06

(54) **BINDER AND PREPARATION METHOD THEREFOR, SEPARATOR, ELECTRODE SHEET, ELECTRODE ASSEMBLY, BATTERY CELL, BATTERY, AND ELECTRICAL APPARATUS**

(30) Priority: 04.01.2023 CN 202310009976
(71) Applicant: Contemporary Amperex Technology Co., Limited, Ningde City, Fujian 352100 (CN)
(72) Inventor: CHENG, Xiaonan, Ningde, Fujian 352100 (CN); HONG, Haiyi, Ningde, Fujian 352100 (CN); LI, Lei, Ningde, Fujian 352100 (CN); YANG, Jianrui, Ningde, Fujian 352100 (CN); KANG, Haiyang, Ningde, Fujian 352100 (CN); ZHENG, Yi, Ningde, Fujian 352100 (CN); SUN, Chengdong, Ningde, Fujian 352100 (CN)
(74) Representative: Gong, Jinping
(86) International application number: PCT/CN2023/098412
(87) International publication number: WO 2024/146063

(57) **Abstract**

This application discloses a binder and a preparation method thereof, a separator, an electrode plate, an electrode assembly, a battery cell, a battery, and an electric apparatus, and relates to the field of battery technologies. The binder includes a polyacrylate copolymer and a lithium-containing compound. As the binder includes a polyacrylate copolymer and a lithium-containing compound, the polymer possesses excellent anti-swelling ability. This also facilitates a good bonding effect, enhances ionic conductivity, and helps control the molecular weight and glass transition temperature of the polymer, and thus improves the bonding performance of the binder. The binder further including a lithium-containing compound, allows the binder to serve as both a binder and a lithium replenisher. This eliminates the need for a separate lithium metal layer or lithium replenishment layer in lithium-ion batteries, improving kinetic performance of the lithium-ion battery, reducing electrochemical impedance, and thus enhancing both the cycling performance and rate performance of the lithium-ion battery.

## Description

### CROSS-REFERENCE TO RELATED APPLICATIONS

This application claims priority to Chinese Patent Application No. 202310009976.4, filed on January 04, 2023 and entitled "BINDER AND PREPARATION METHOD THEREOF, SEPARATOR, ELECTRODE PLATE, ELECTRODE ASSEMBLY, BATTERY CELL, BATTERY, AND ELECTRIC APPARATUS", which is incorporated herein by reference in its entirety.

### TECHNICAL FIELD

This application relates to the field of battery technologies, and in particular, to a binder and a preparation method thereof, a separator, an electrode plate, an electrode assembly, a battery cell, a battery, and an electric apparatus.

### BACKGROUND

Batteries have found wide applications in automotive traction, electric energy storage, portable electronic products, and electric tools. During the first charging and discharging process of a battery, due to the generation of SEI film on surface of the negative electrode, as well as the presence of side reactions of some dead lithium and other impurity in the positive electrode material, efficiency of the first charging and discharging is reduced, affecting cycling performance and rate performance of the battery.

### SUMMARY

This application is carried out in view of the preceding subject with a purpose to provide a binder with good bonding performance, which further has a lithium replenishment effect, thus contributing to reducing electrochemical impedance, and enhancing both the cycling performance and rate performance of the lithium-ion battery.

To achieve the above objective, this application provides a binder and a preparation method thereof, a separator, an electrode plate, an electrode assembly, a battery cell, a battery, and an electric apparatus.

In a first aspect, an embodiment of this application provides a binder including a polyacrylate copolymer and a lithium-containing compound.

Therefore, in the technical solution of embodiment of this application, as the binder includes a polyacrylate copolymer and a lithium-containing compound, the polymer possesses excellent anti-swelling ability. This also facilitates a good bonding effect, enhances ionic conductivity, and helps control molecular weight and glass transition temperature of the polymer, and thus improves the bonding performance of the binder. In addition, the binder further including a lithium-containing compound allows the binder to serve as both a binder and a lithium replenisher. This eliminates the need for a separate lithium metal layer or lithium replenishment layer in lithium-ion batteries. Instead, the binder facilitates rapid replenishment of consumed lithium ions in the lithium battery, thereby increasing the ion transfer speed and enhancing structural stability of the lithium-ion battery during cycling. The binder is applied to the separator or electrode plate of a lithium-ion battery, improving kinetic performance of the lithium-ion battery, reducing electrochemical impedance, and thus enhancing both the cycling performance and rate performance of the lithium-ion battery.

In any embodiment, the monomers of the polyacrylate copolymer include acrylate monomers, acrylonitrile monomers, and acrylamide monomers.

As a result, the acrylate monomers enhance the anti-swelling ability of the polymer and, as a flexible monomer chain segment in a molecular chain segment, can regulate glass transition temperature of the polymer, improving the toughness of the binder during application and contributing to effective adhesion. The acrylonitrile monomers, with their cyano group having a strong polarity, help to increase the ionic conductivity. The acrylamide monomers regulate the molecular weight. The co-existence of the three types of monomers can control the molecular weight and glass transition temperature of the polymer, thus improving the bonding performance of the binder.

In any embodiment, a molar ratio of the acrylate monomers, the acrylonitrile monomers, and the acrylamide monomers is 1:(0.01 to 0.8):(0.01 to 0.15), optionally 1:(0.05 to 0.7):(0.05 to 0.12). The molar ratio of these three types of monomers being controlled within the foregoing range further controls the molecular weight and glass transition temperature of the polymer, thus improving the bonding performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, and lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide and N-butoxymethacrylamide. Experiments have shown that using the foregoing substances as the three types of monomers yields good lithium replenishment and bonding effects, which in turn enhances the cycling performance and rate performance of the lithium-ion battery.

In any embodiment, a mass ratio of lithium to the polyacrylate copolymers is 1 :(10 to 1000), optionally 1:(100 to 600). This ratio enables the binder to exhibit both excellent lithium replenishment and bonding effects.

In any embodiment, the binder has a volumetric median particle size Dᵥ50 ≤ 50 µm, and optionally, Dᵥ50 is 7-8 µm. The particle size in this range provides good bonding and lithium replenishment effects.

In a second aspect, an embodiment of this application provides a preparation method of binder, including:
adding monomers of a polyacrylate copolymer to a first emulsifier solution to obtain a pre-emulsion;
adding an initiator to the pre-emulsion for reaction to obtain a reaction solution; and
adding a lithium-containing substance to the reaction solution to adjust pH value to 7 to 8 and performing filtering to obtain the binder.

Emulsion polymerization allows for fast polymerization, which facilitates heat transfer and temperature control. Viscosity of the emulsion polymerization system remains low even after the reaction reaches a high conversion rate, ensuring a stable dispersion system. This method is easier to control and enables continuous operation. In addition, the use of a lithium-containing substance as a pH regulator saves the use of an additional pH regulator, reducing the addition of chemicals, thus reducing the probability of side reactions. Furthermore, this increases the Li content in the binder, allowing for the rapid replenishment of consumed lithium ions in the lithium battery, which in turn enhances the ion transfer speed and improves the structural stability during the cycling of the lithium-ion battery. The application of the binder on the separator in the lithium-ion battery enhances the kinetic performance, lowers the electrochemical impedance, and thus improves both the cycling performance and rate performance of the lithium-ion battery.

In any embodiment, in the step of adding monomers of a polyacrylate copolymer to a first emulsifier solution to obtain a pre-emulsion, the monomers of the polyacrylate copolymer include acrylate monomers, acrylonitrile monomers, and acrylamide monomers.

The acrylate monomers enhance the anti-swelling ability of the polymer and, as a flexible monomer chain segment in a molecular chain segment, can regulate glass transition temperature of the polymer, improving the toughness of the binder during application and contributing to effective adhesion. The acrylonitrile monomers, with their cyano group having a strong polarity, help to increase the ionic conductivity. The acrylamide monomers regulate the molecular weight. The co-existence of the three types of monomers can control the molecular weight and glass transition temperature of the polymer, thus improving the bonding performance of the binder.

In any embodiment, a molar ratio of the acrylate monomers, the acrylonitrile monomers, and the acrylamide monomers is 1:(0.01 to 0.8):(0.01 to 0.15), optionally 1:(0.05 to 0.7):(0.05 to 0.12). The molar ratio of these three types of monomers being controlled within the foregoing range further controls the molecular weight and glass transition temperature of the polymer, thus improving the bonding performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, and lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide and N-butoxymethacrylamide. Experiments have shown that using the foregoing substances as the three types of monomers yields good lithium replenishment and bonding effects, which in turn enhances the cycling performance and rate performance of the lithium-ion battery.

In any embodiment, a mass ratio of lithium to the polyacrylate copolymers is 1 :(10 to 1000), optionally 1:(100 to 600). This ratio enables the binder to exhibit both excellent lithium replenishment and bonding effects.

In any embodiment, the step of adding an initiator to the pre-emulsion for reaction to obtain a reaction solution includes:
under a heated reflux condition, adding the pre-emulsion to a second emulsifier solution and adding the initiator for reaction, to obtain the reaction solution.

With the first emulsifier and the second emulsifier used, the reactants are mixed better, leading to a more thorough reaction and resulting in a more even distribution of the products.

In any embodiment, temperature for the reaction is 20°C to 90°C and duration of the reaction is 20 min to 40 min. Experiments have shown that under the foregoing temperature and duration of reaction, the reaction is more thorough and exhibits fewer side reactions.

In any embodiment, in the step of adding a lithium-containing substance to the reaction solution to adjust pH value to 7 to 8 and performing filtering to obtain the binder,
the lithium-containing substance includes at least one of lithium hydroxide, lithium oxide, lithium carbonate and elemental lithium. The use of a lithium-containing substance as a pH regulator saves the use an additional pH regulator, reducing the addition of chemicals, thus reducing the probability of side reactions. Furthermore, this increases the Li content in the binder, allowing for the rapid replenishment of consumed lithium ions in the lithium battery, which in turn enhances the ion transfer speed and improves the structural stability during the cycling of the lithium-ion battery.

The mass ratio of lithium to the polyacrylate copolymers is 1 :(10 to 1000), optionally 1 :(100 to 600). This ratio allows for better pH regulation and lithium replenishment effects.

In a third aspect, an embodiment of this application provides a separator including the binder according to some embodiments of the first aspect of this application or a binder prepared according to the preparation method of binder according to some embodiments of the second aspect.

In a fourth aspect, an embodiment of this application provides an electrode plate including the binder according to some embodiments of the first aspect of this application or a binder prepared according to the preparation method of binder according to some embodiments of the second aspect.

According to a fifth aspect, an embodiment of this application provides an electrode assembly, including at least one of the binder according to some embodiments of the first aspect of this application, a binder prepared according to the preparation method of binder according to some embodiments of the second aspect of this application, the separator according to some embodiments of the third aspect of this application, and the electrode plate according to some embodiments of the fourth aspect of this application.

According to a sixth aspect, an embodiment of this application provides a battery cell, including the electrode assembly according to some embodiments of the fifth aspect of this application.

According to a seventh aspect, an embodiment of this application provides a battery, including the battery cell according to some embodiments of the sixth aspect of this application.

According to an eighth aspect, an embodiment of this application provides an electric apparatus, including the battery cell according to some embodiments of the sixth aspect of this application or the battery according to some embodiments of the seventh aspect of this application.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some of the embodiments of the present invention, and persons of ordinary skill in the art may still derive other relative drawings from these accompanying drawings without creative efforts.
FIG. 1 is a schematic diagram of a battery cell according to an embodiment of this application;
FIG. 2 is an exploded view of the battery cell according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4;
FIG. 6 is a schematic diagram of an electric apparatus using a secondary battery in an embodiment of this application as a power source; and
FIG. 7 is a SEM image of a binder of example 1 of this application.

Description of reference signs:
1. battery pack; 2. upper box body; 3. lower box body; 4. battery module; 5. secondary battery; 51. housing; 52. electrode assembly; and 53. top cover assembly.

Objective achievement, functional features, and advantages of the present invention are further described with reference to the embodiments and the accompanying drawings.

### DESCRIPTION OF EMBODIMENTS

The following specifically discloses embodiments of the binder, separator, electrode plate, electrode assembly, battery cell, battery, and electric apparatus of this application with appropriate reference to detailed descriptions of the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Lithium-ion batteries have found wide applications in automotive traction, electric energy storage, portable electronic products, and electric tools. During the first charging and discharging process of a lithium-ion battery, due to the generation of SEI film on surface of the negative electrode, as well as the presence of side reactions of some dead lithium and other impurity in the positive electrode material, efficiency of the first charging and discharging is reduced. To replenish lithium on the separator, general methods include: separator with a prefabricated lithium layer, where the pre-lithiated separator includes multiple stacked separator layers, the separator layers including a polymer film, a lithium metal layer, and a protective layer; separator with a lithium coating, where an adhesive is applied on one side of the substrate and lithium replenishment slurry is applied on surface of the other side, followed by drying in an oven to obtain a composite separator with lithium replenishment; and ceramic composite separator, provided with a ceramic layer and a ceramic-lithium replenishment layer on two sides of the substrate, enabling timely replenishment of consumed lithium ions, increasing the ion transfer speed, and enhancing the structural stability of lithium battery during cycling. These methods involve the presence of an independent lithium metal layer or lithium replenishment layer. While such layers can improve kinetics, they can also affect adhesion between the separator and the electrode plate, thereby affecting the cycling performance and rate performance of the battery.

In other words, the inventors have found in practical work that use of lithium replenisher in existing battery technologies can affect the adhesion between the separator and the electrode plate, thereby affecting the cycling performance and rate performance of the battery.

Given this, after conducting extensive research and experiments, the applicant has come up with an idea that if the lithium replenisher and binder could be combined into a single material, no additional lithium replenishment layer would be needed. This solution addresses the issue of the effect on the adhesion between the separator and the electrode plate and the effect on the cycling performance and rate performance of the battery.

Furthermore, after conducting extensive experiments, the inventors have found that an organic polymer obtained by polymerizing polymer monomers containing specific functional groups in a specific weight ratio exhibits excellent bonding performance. Such polymers are suitable for effectively utilizing their bonding performance under battery operating conditions, thereby enhancing the kinetic and safety performance of the secondary battery. In addition, when the binder is applied to the separator, it helps to reduce the resistance of the separator and enhance the ionic conductivity of the separator, thereby improving the battery performance.

From the perspective of market development, application of traction batteries is being increasingly extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In view of this, this application provides a binder, a separator, an electrode plate, an electrode assembly, a battery cell, a battery, and an electric apparatus.

In a first aspect, an embodiment of this application provides a binder including a polyacrylate copolymer and a lithium-containing compound.

Polyacrylate copolymer is a collective term for polymers that are produced through copolymerization reactions using acrylate as a raw material. Acrylic contains active double bonds, making it prone to self-polymerization as well as copolymerization. One or more types of copolymer monomers may be used, which may be other acrylic compounds or other unsaturated compounds with double bonds, such as styrene, acrylamide, vinyl acetate, and vinyl chloride.

The lithium-containing compound is a compound containing lithium, which can be organic or inorganic. As long as it contains lithium, any compounds fall within the scope of protection of this application.

Therefore, in the technical solution of embodiment of this application, as the binder includes a polyacrylate copolymer and a lithium-containing compound, the polymer possesses excellent anti-swelling ability. This also facilitates a good bonding effect, enhances ionic conductivity, and helps control the molecular weight and glass transition temperature of the polymer, and thus improves the bonding performance of the binder. In addition, the binder further including a lithium-containing compound allows the binder to serve as both a binder and a lithium replenisher. This eliminates the need for a separate lithium metal layer or lithium replenishment layer in lithium-ion batteries. Instead, the binder facilitates rapid replenishment of consumed lithium ions in the lithium battery, thereby increasing the ion transfer speed and enhancing structural stability of the lithium-ion battery during cycling. The binder is applied to the separator or electrode plate of the lithium-ion battery, improving kinetic performance of the lithium-ion battery, reducing electrochemical impedance, and thus enhancing both the cycling performance and rate performance of the lithium-ion battery.

In any embodiment, the monomers of the polyacrylate copolymer include acrylate monomers, acrylonitrile monomers, and acrylamide monomers.

The acrylate monomer is a monomer that contains an acrylate group, with the following simplified structural formula: 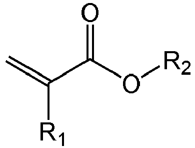 where R₁ includes a hydrogen atom or an alkyl group containing 1 to 6 carbon atoms, R₂ includes a substituted or unsubstituted alkyl group containing 1 to 15 carbon atoms or cycloalkyl or isobutenyl group containing 3 to 6 carbon atoms, and in the case of being substituted, a substituent group includes a hydroxyl group or an alkyl group containing 1 to 6 carbon atoms.

The acrylonitrile monomer is a monomer that contains an acrylonitrile group, with the following simplified structural formula: 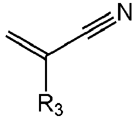 where R₃ includes a hydrogen atom or an alkyl group containing 1 to 6 carbon atoms.

The acrylamide monomer is a monomer that contains an acrylamide group, with the following simplified structural formula: 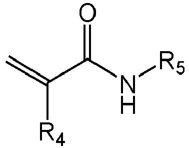 where R₄ includes a hydrogen atom or an alkyl group containing 1 to 6 carbon atoms, and R₅ includes a hydrogen atom, or a hydroxy group-substituted alkyl group containing 1 to 6 carbon atoms or alkoxy group containing 1 to 6 carbon atoms.

As a result, the acrylate monomers enhance the anti-swelling ability of the polymer and, as a flexible monomer chain segment in a molecular chain segment, can regulate glass transition temperature of the polymer, improving the toughness of the binder during application and contributing to effective adhesion. The acrylonitrile monomers, with their cyano group having a strong polarity, help to increase the ionic conductivity. The acrylamide monomers regulate the molecular weight. The co-existence of the three types of monomers can control the molecular weight and glass transition temperature of the polymer, thus improving the bonding performance of the binder.

It can be understood that this application does not impose any limitations on the arrangement of monomers in the polyacrylate copolymer. It is possible that acrylate monomers, acrylonitrile monomers, and acrylamide monomers are arranged sequentially or arranged in a disorderly manner. All of these arrangements fall within the scope of protection of this application.

In any embodiment, a molar ratio of the acrylate monomers, the acrylonitrile monomers and the acrylamide monomers is 1:(0.01 to 0.8):(0.01 to 0.15). This ratio may be, for example but not limited to, any one of 1:0.01:0.01, 1:0.01:0.15, 1:0.8:0.01, 1:0.8:0.15, 1:0.4:0.01, 1:0.4:0.15, 1:0.01:0.08, 1:0.8:0.08, or a value within a range between any two of them. The molar ratio of these three types of monomers being controlled within the foregoing range further controls the molecular weight and glass transition temperature of the polymer, thus improving the bonding performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, and lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide and N-butoxymethacrylamide. Experiments have shown that using the foregoing substances as the three types of monomers yields good lithium replenishment and bonding effects, which in turn enhances the cycling performance and rate performance of the lithium-ion battery.

In any embodiment, a mass ratio of lithium to the polyacrylate copolymers is 1 :(10 to 1000), which can be, for example, but not limited to, any one of 1:10, 1: 100, 1:200, 1:300, 1:400, 1:500, 1:600, 1:700, 1:800, 1:900, 1: 1000, or a value within a range between any two of them. This ratio enables the binder to exhibit both excellent lithium replenishment and bonding effects.

Lithium refers to the lithium present in the lithium-containing compound. It can be understood that in this embodiment of this application, lithium is connected to the polyacrylate copolymer via polymeric ionic bonds and exists in the binder in a form of a compound.

In any embodiment, the binder has a volumetric median particle size Dᵥ50 ≤ 50 µm, and in this embodiment of this application, Dᵥ50 is 7-8 µm. The particle size in this range provides good bonding and lithium replenishment effects.

In this embodiment of this application, the particle size corresponding to the cumulative particle size distribution percentage of 50% for the binder particles is denoted as Dᵥ50, which is tested according to:

GB/T 19077-2016/ISO 13320: 2009 particle size distribution laser diffraction method: Use a laser particle size analyzer (Malvern 3000, MasterSizer 3000) to perform the test, with a helium-neon red light source as the main light source. Take a clean small beaker and add 1 g of the sample under test, add a drop of surfactant, add 20 ml of deionized water (such that the sample concentration ensures a shading degree of 8-12%), and sonicate at 53 kHz/120 W for 5 minutes to ensure complete dispersion of the sample. Turn on the laser particle size analyzer, clean the optical path system, and perform automatic background test. Stir the sonicated solution under test to ensure its uniform dispersion, place it in the sample pool as required, and start measuring the particle size. Read measurement results from the instrument.

In a second aspect, an embodiment of this application provides a preparation method of binder, including:
adding monomers of a polyacrylate copolymer to a first emulsifier solution to obtain a pre-emulsion;
adding an initiator to the pre-emulsion for reaction to obtain a reaction solution; and
adding a lithium-containing substance to the reaction solution to adjust pH value to 7 to 8 and performing filtering to obtain the binder.

Emulsifiers are a type of organic compound that allow mutually immiscible liquids to form stable emulsions. They are all substances with surface activity capable of reducing interfacial tension between liquids, making it easier for immiscible liquids to be emulsified. During emulsification, a dispersed phase is evenly distributed in a continuous phase in a form of very small liquid droplets (with the diameter ranging from 0.1 micrometers to tens of micrometers), and the emulsifier forms a thin film or an electrical double layer on the surface of the droplets to prevent their coalescence and maintain stability of the emulsion. In this embodiment of this application, the emulsifier used is sodium dodecyl sulfonate.

The pre-emulsion is a solution formed by emulsifying the monomers of the polyacrylate copolymer, enabling the monomers to form a stable emulsion.

The initiators, also known as radical initiators, refer to a class of compounds that are easily decomposed by heat into radicals (or primary radicals). They can be used to initiate radical polymerization and co-polymerization reactions of alkenes and dienes monomers, or be used for cross-linking curing and polymer cross-linking reactions of unsaturated polyesters. In this embodiment of this application, the initiator used is potassium persulfate.

The value of hydrogen ion concentration index is commonly known as "pH" value. It is a value indicating the degree of acidity or alkalinity of a solution, specifically a negative logarithm of the concentration of hydrogen ions present in the solution. The pH value can be measured using pH paper or a pH meter.

Emulsion polymerization allows for fast polymerization, which facilitates heat transfer and temperature control. Viscosity of the emulsion polymerization system remains low even after the reaction reaches a high conversion rate, ensuring a stable dispersion system. This method is easier to control and enables continuous operation. In addition, the use of a lithium-containing substance as a pH regulator saves the use of an additional pH regulator, reducing the addition of chemicals, thus reducing the probability of side reactions. Furthermore, this increases the Li content in the binder, allowing for the rapid replenishment of consumed lithium ions in the lithium battery, which in turn enhances the ion transfer speed and improves the structural stability during the cycling of the lithium-ion battery. The application of the binder on the separator in the lithium-ion battery enhances the kinetic performance, lowers the electrochemical impedance, and thus improves both the cycling performance and rate performance of the lithium-ion battery.

Persons skilled in the art can understand that in specific embodiments, the steps of the foregoing method in the order recorded do not necessarily indicate a strict sequence of execution that imposes any limitations on the implementation process. The specific order of executing the steps should be determined based on their functionality and potential inherent logic.

In any embodiment, in the step of adding monomers of a polyacrylate copolymer to a first emulsifier solution to obtain a pre-emulsion, the monomers of the polyacrylate copolymer include acrylate monomers, acrylonitrile monomers, and acrylamide monomers.

The acrylate monomers enhance the anti-swelling ability of the polymer and, as a flexible monomer chain segment in a molecular chain segment, can regulate glass transition temperature of the polymer, improving the toughness of the binder during application and contributing to effective adhesion. The acrylonitrile monomers, with their cyano group having a strong polarity, help to increase the ionic conductivity. The acrylamide monomers regulate the molecular weight. The co-existence of the three types of monomers can control the molecular weight and glass transition temperature of the polymer, thus improving the bonding performance of the binder.

In any embodiment, a molar ratio of the acrylate monomers, the acrylonitrile monomers and the acrylamide monomers is 1:(0.01 to 0.8):(0.01 to 0.15).

The molar ratio of monomers refers to a ratio of molar numbers, and may be, for example but not limited to, any one of 1:0.01:0.01, 1:0.01:0.15, 1:0.8:0.01, 1:0.8:0.15, 1:0.4:0.01, 1:0.4:0.15, 1:0.01:0.08, 1:0.8:0.08, or a value within a range between any two of them. The molar ratio of these three types of monomers being controlled within the foregoing range further controls the molecular weight and glass transition temperature of the polymer, thus improving the bonding performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, and lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide and N-butoxymethacrylamide. Experiments have shown that using the foregoing substances as the three types of monomers yields good lithium replenishment and bonding effects, which in turn enhances the cycling performance and rate performance of the lithium-ion battery.

In any embodiment, a mass ratio of lithium to the polyacrylate copolymers is 1 :(10 to 1000), which can be, for example, but not limited to, any one of 1:10, 1: 100, 1:200, 1:300, 1:400, 1:500, 1:600, 1:700, 1:800, 1:900, 1: 1000, or a value within a range between any two of them. This ratio enables the binder to exhibit both excellent lithium replenishment and bonding effects.

In any embodiment, the step of adding an initiator to the pre-emulsion for reaction to obtain a reaction solution includes:
under a heated reflux condition, adding the pre-emulsion to a second emulsifier solution and adding the initiator for reaction, to obtain the reaction solution.

With the first emulsifier and the second emulsifier used, the reactants are mixed better, leading to a more thorough reaction and resulting in a more even distribution of the products.

It can be understood that in this embodiment of this application, the first emulsifier and second emulsifier can be commonly used emulsifiers in the field, such as sodium dodecyl sulfonate. This is not limited in this application. Furthermore, the first emulsifier and second emulsifier can be the same or different, and this is also not limited in this application.

In any embodiment, temperature for the reaction is 20°C to 90°C, which may be, for example, but not limited to, any one of 20°C, 30°C, 40°C, 50°C, 60°C, 70°C, 80°C, 90°C, or a value within a range between any two of them. The duration of the reaction is from 20 min to 40 min, which may be, for example, but not limited to, any one of 20 min, 22 min, 25 min, 28 min, 30 min, 33 min, 35 min, 37 min, 40 min, or a value within a range between any two of them. Experiments have shown that under the foregoing temperature and duration of reaction, the reaction is more thorough and exhibits fewer side reactions.

It can be understood that the foregoing limits of reaction temperature and duration of the reaction can be either or both satisfied. In an embodiment of this application, both of them are satisfied, resulting in a more thorough reaction with fewer side reactions.

In any embodiment, in the step of adding a lithium-containing substance to the reaction solution to adjust pH value to 7 to 8 and performing filtering to obtain the binder,
the lithium-containing substance includes at least one of lithium hydroxide, lithium oxide, lithium carbonate and elemental lithium. These lithium-containing substances are all alkaline and can act as pH regulators for the reaction solution. The use of a lithium-containing substance as a pH regulator saves the use of an additional pH regulator, reducing the addition of chemicals, thus reducing the probability of side reactions. Furthermore, this increases the Li content in the binder, allowing for the rapid replenishment of consumed lithium ions in the lithium battery, which in turn enhances the ion transfer speed and improves the structural stability during the cycling of the lithium-ion battery.

A mass ratio of lithium to the polyacrylate copolymers is 1:(10 to 1000), which can be, for example, but not limited to, any one of 1:10, 1:100, 1:200, 1:300, 1:400, 1:500, 1:600, 1:700, 1:800, 1:900, 1:1000, or a value within a range between any two of them. This ratio allows for better pH regulation and lithium replenishment effects.

In a third aspect, an embodiment of this application provides a separator including the binder according to some embodiments of the first aspect of this application or a binder prepared according to the preparation method of binder according to some embodiments of the second aspect.

When the binder according to the first aspect of this application is applied to the separator, it helps to reduce the resistance of the separator and improve the ionic conductivity of the separator, thereby improving the battery performance and providing effective lithium replenishment.

The separator substrate is not limited to any particular type in this application, and may be any well-known porous separator substrate with good chemical stability and mechanical stability.

In some embodiments, a substrate of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

The separator described in this application may be prepared using conventional methods for separators in the art. For example, the binder described in the first aspect of this application may be dissolved in an organic solvent to obtain a slurry. The slurry may then be applied onto the material of the separator. Subsequently, the organic solvent may then be removed by drying to obtain the separator as described in this application.

In some embodiments, the binder is applied on the separator substrate at a density of 0.3 g/m² to 1.0 g/m², and further 0.3 g/m² to 0.8 g/m².

In a fourth aspect, this application provides an electrode plate including the binder according to some embodiments of the first aspect of this application or a binder prepared according to the preparation method of binder according to some embodiments of the second aspect of this application. The electrode plate includes the binder according to some embodiments of the first aspect of this application or a binder prepared according to the preparation method of binder according to some embodiments of the second aspect of this application. The electrode plate may be prepared according to a method commonly used in the art.

It should be noted that the electrode plate described in this application may be a positive electrode plate or a negative electrode plate.

The positive electrode plate includes a positive electrode current collector and a positive electrode film layer disposed on at least one surface of the positive electrode current collector, where the positive electrode film layer includes the binder according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material for batteries in the art. For example, the positive electrode active material may include at least one of the following materials: olivine-structured lithium-containing phosphate, lithium transition metal oxide, and their respective modified compounds. However, this application is not limited to these materials, and may alternatively use other conventional materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.3}Mn_{0.2}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCM₈₁₁ for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), composite material of lithium iron phosphate and carbon, lithium manganese phosphate (for example, LiMnPO₄), composite material of lithium manganese phosphate and carbon, lithium manganese iron phosphate, and composite material of lithium manganese iron phosphate and carbon.

In some embodiments, the positive electrode plate may be prepared in the following manner: the foregoing constituents used for preparing the positive electrode plate, for example, the positive electrode active material, the conductive agent, the binder according to some embodiments of the first aspect of this application, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

In some embodiments, the amount of the binder according to some embodiments of the first aspect of this application in the positive electrode plate is 1% to 3%, based on the total weight of the positive electrode film layer.

Similarly, the electrode plate described in this application may alternatively be a negative electrode plate. The negative electrode plate includes a negative electrode current collector and a negative electrode film layer disposed on at least one surface of the negative electrode current collector, where the negative electrode film layer includes the binder according to the first aspect of this application.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (such as matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material for batteries in the art. For example, the negative electrode active material may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may alternatively use other conventional well-known materials that can be used as negative electrode active materials for batteries. One type of these negative electrode active materials may be used alone, or two or more of them may be used in combination.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer may further optionally include other additives such as a thickener (such as
sodium carboxymethyl cellulose (CMC-Na)).

In some embodiments, the negative electrode plate may be prepared in the following manner: the foregoing constituents used for preparing the negative electrode plate, for example, the negative electrode active material, the conductive agent, the binder according to some embodiments of the first aspect of this application, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

In some embodiments, the amount of the binder according to some embodiments of the first aspect of this application in the negative electrode plate is 1% to 3%, based on the total weight of the negative electrode film layer.

According to a fifth aspect, an embodiment of this application provides an electrode assembly, including at least one of the binder according to some embodiments of the first aspect of this application, a binder prepared according to the preparation method of binder according to some embodiments of the second aspect of this application, the separator according to some embodiments of the third aspect of this application, and the electrode plate according to some embodiments of the fourth aspect of this application. The electrode assembly proposed in this application has all the beneficial effects of the foregoing binder. Details are not described herein again.

According to a sixth aspect, an embodiment of this application provides a battery cell, including the electrode assembly according to some embodiments of the fifth aspect of this application.

Typically, the battery cell includes a positive electrode plate, a negative electrode plate, an electrolyte, and a separator. In a charging and discharging process of a battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent short circuit between positive and negative electrodes and to allow the ions to pass through.

The battery cell may be prepared by methods commonly used in the art. For example, the positive electrode plate, the negative electrode plate, and the separator may be made into an electrode assembly through winding or stacking. Then, the electrolyte is injected into electrode assembly which is then sealed to obtain the battery cell.

The electrolyte conducts ions between the positive electrode plate and the negative electrode plate. The electrolyte is not specifically limited to any particular type in this application and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bisfluorosulfoimide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive and a positive electrode film-forming additive or may include an additive that can improve some performance of a battery, for example, an additive for improving over-charge performance of a battery, an additive for improving high-temperature performance or low-temperature performance of a battery, and the like.

In some embodiments, the positive electrode plate, the negative electrode plate, and the separator may be made into an electrode assembly through winding or stacking.

In some embodiments, the battery cell may include an outer package. The outer package may be used for packaging the foregoing electrode assembly and electrolyte.

In some embodiments, the outer package of the battery cell may be a hard shell, for example, a hard plastic shell, an aluminum shell, or a steel shell. The outer package of the battery cell may alternatively be a soft pack, for example, a soft bag. A material of the soft pack may be plastic. As plastic, polypropylene, polybutylene terephthalate, polybutylene succinate, and the like may be listed.

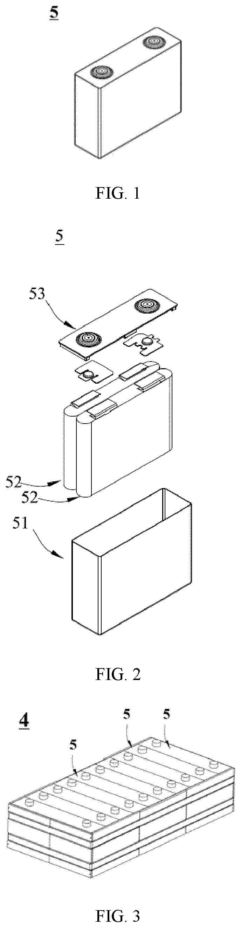

This application does not impose any special limitations on the shape of the battery cell, and the battery cell may be cylindrical, rectangular, or of any other shapes. For example, FIG. 1 shows, as an example, a battery cell 5 of a rectangular structure.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or stacking. The electrode assembly 52 is packaged in the accommodating cavity. The liquid electrolyte infiltrates the electrode assembly 52. The battery cell 5 may include one or more electrode assemblies 52, and persons skilled in the art may make choices according to actual requirements.

According to a seventh aspect, an embodiment of this application provides a battery, including the battery cell according to some embodiments of the sixth aspect of this application. The battery may be in the form of a battery module or a battery pack, and the number of battery cells contained in the battery module may be one or more. The specific number may be selected by those skilled in the art based on the use and capacity of the battery module.

FIG. 3 shows a battery module 4 as an example. Referring to FIG. 3, in the battery module 4, a plurality of battery cells 5 may be sequentially arranged in a length direction of the battery module 4. Certainly, the battery cells may alternatively be arranged in any other manners. Further, the plurality of battery cells 5 may be fastened through fasteners.

In any embodiment, the battery module 4 may further include a housing with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

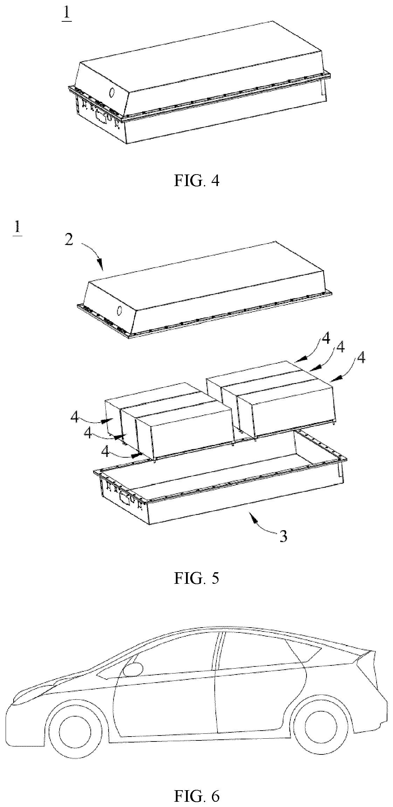

FIG. 4 and FIG. 5 show a battery pack 1 as an example. Referring to FIG. 4 and FIG. 5, the battery pack 1 may include a battery box and multiple battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

According to an eighth aspect, an embodiment of this application provides an electric apparatus, including the battery cell according to some embodiments of the sixth aspect of this application or the battery according to some embodiments of the seventh aspect of this application.

The battery cell and the battery may be used as a power source of the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is usually required to be light and thin and may use a secondary battery as a power source.

The technical solutions of this application are further described in detail in the following in combination with the specific examples and accompanying drawings. It should be understood that the following examples are only intended to explain this invention, not intended to limit this invention.

Related parameters of the binders in examples 1 to 17 and comparative examples 1 to 2 are shown in Table 1.

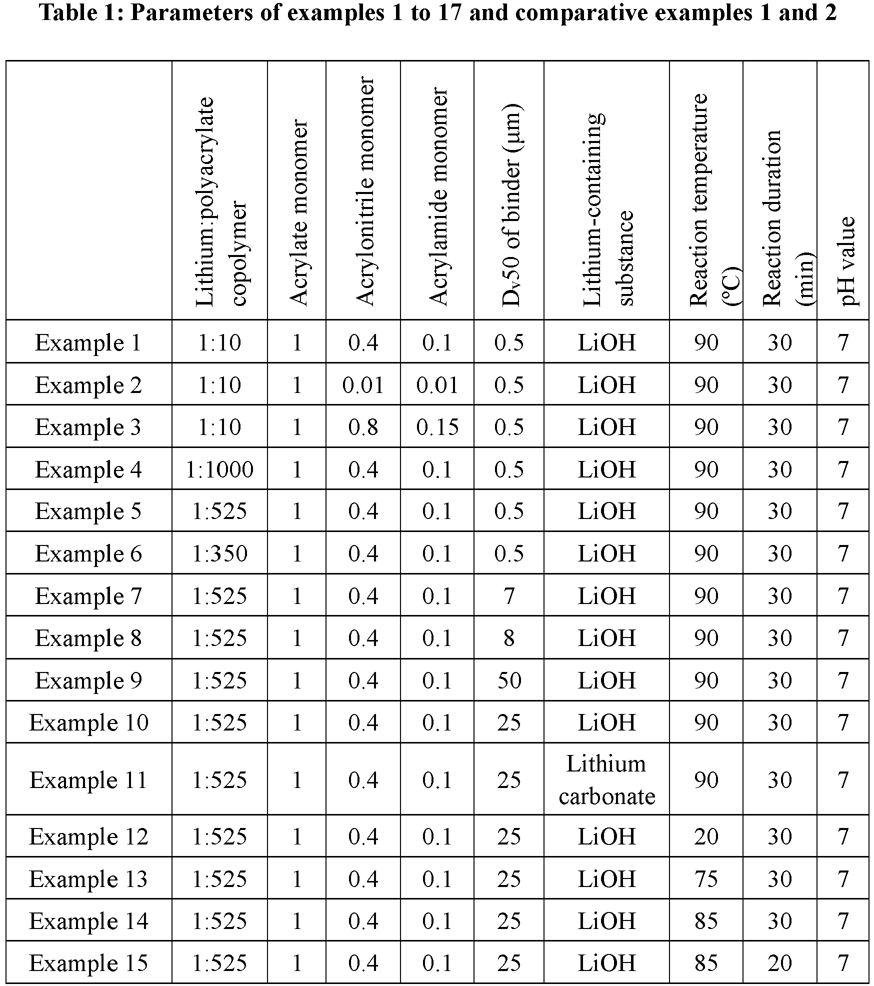

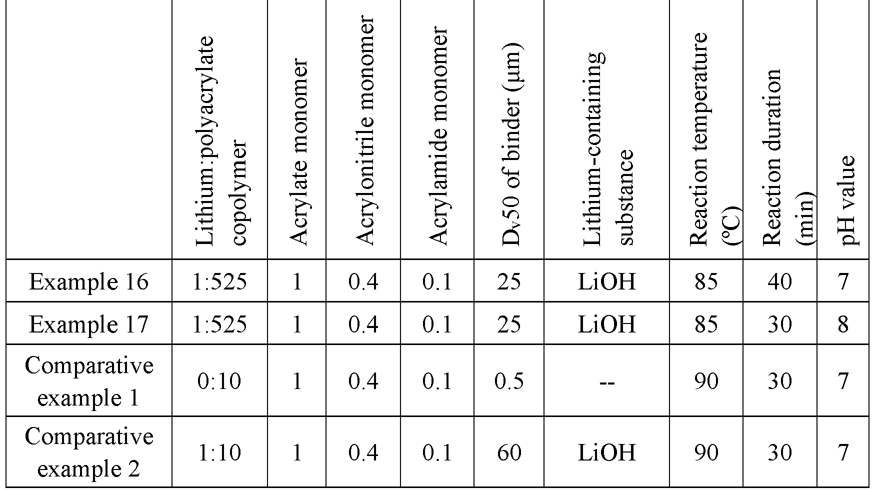

### Example 1

### [Preparation of binder]

(1) 150 g of deionized water and 3.6 g of sodium dodecyl sulfonate were added to a 500 ml three-necked flask. The mixture was stirred thoroughly for 15 min to achieve emulsification. Then, 75.24 g of methyl acrylate, 18.55 g of acrylonitrile, and 6.21 g of acrylamide were added sequentially. A molar ratio of the three types of monomers was 1 :0.4:0.1. The mixture was stirred thoroughly for 60 minutes to obtain a pre-emulsion of the monomers. The pre-emulsion was then removed and set aside for future use.
(2) 100 ml of deionized water and 0.15 g of sodium dodecyl benzene sulfonate were added to the 500 ml three-necked flask. The mixture was heated to 80°C and emulsified at a speed of 2000 r/min for 15 min to achieve full emulsification of the system. Then, the pre-emulsion prepared in step (1) and an initiator solution (0.2 g of potassium persulfate dissolved in 30 g of deionized water) were slowly added dropwise. After the completion of the dropwise addition, the temperature was raised to 90°C, the mixture was reacted for 0.5 h, and then cooled to 40°C.
(3) The pH was regulated to 7 using an aqueous LiOH solution. Then, stirring was stopped, followed by filtering and material discharge.

### [Preparation of separator]

Commercially available PP-PE copolymer microporous film (from Advanced Electronic Technology Co., model 20) with a thickness of 20 µm and an average pore size of 80 nm was used as a substrate. The binder prepared as mentioned above was thoroughly stirred and mixed with deionized water to obtain a slurry (with a solid content of 20%). The slurry was evenly applied on both surfaces of the substrate and then dried to remove the solvent. Subsequently, the coating composition was applied to the substrate with a coating density of 1.0 g/m² to obtain the separator.

### [Preparation of positive electrode plate]

Polyvinylidene fluoride (PVDF), lithium iron phosphate (LFP), conductive agent carbon black, and N-methylpyrrolidone (NMP) were mixed in a mass ratio of 1.2:58.38:0.42:40. After thorough stirring and mixing, the positive electrode slurry was prepared. This positive electrode slurry was evenly applied to a positive electrode current collector aluminum foil with a loading amount of 200 g/m², followed by drying, cold pressing, and cutting, to obtain the positive electrode plate.

### [Preparation of negative electrode plate]

Artificial graphite, conductive agent acetylene black, binder styrene-butadiene rubber (SBR), and thickener sodium carboxymethyl cellulose (CMC-Na) are added into deionized water according to a mass ratio of 96.2:1.0:1.6:1.2, and after thorough stirring and mixing, a uniform negative electrode slurry (with a solid content of 63%) was prepared. This negative electrode slurry was applied to a negative electrode current collector copper foil with a loading amount of 98 g/m², followed by drying, cold pressing, and cutting, to obtain the negative electrode plate.

### [Preparation of electrolyte]

At 25°C, ethylene carbonate (EC), ethyl methyl carbonate (EMC), and diethyl carbonate (DEC) were mixed according to a volume ratio of 1:1:1 to obtain a mixed solvent. Then, LiPF₆ was dissolved in the mixed solvent to obtain an electrolyte, where the concentration of LiPF₆ was 1 mol/L.

### [Preparation of secondary battery]

The foregoing positive electrode plate, separator, and negative electrode plate were stacked in order and wound, followed by pre-pressing molding (in this process, adhesion occurs between the separator and the electrode plates) to obtain an electrode assembly. The electrode assembly was put into an outer package, the electrolyte prepared above was injected, and steps such as sealing, standing, formation, and aging were performed to obtain the secondary battery.

The preparation of binder, separator, positive electrode plate, negative electrode plate, electrolyte and secondary battery in examples 2 to 17 and comparative examples 1 and 2 followed the same procedure as example 1, with the difference that they were prepared according to the parameters specified in Table 1.

The binder in comparative example 1 did not contain lithium, and the binder in comparative example 2 had a particle size that exceeded 50 µm.

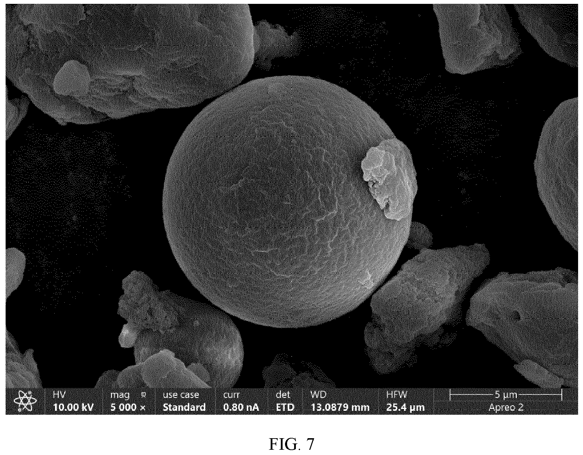

The binder obtained from example 1 was subjected to scanning electron microscopy, resulting in FIG. 7. From the image, it can be observed that the binder prepared in example 1 of this application exhibits a spherical overall shape with a particle size of approximately 8 µm.

The following tests were conducted on the products of examples 1 to 17 and comparative examples 1 and 2.

### 1. Test of adhesion between separator and electrode plate:

The battery electrode plate and the separator were overlapped together and placed on a hot pressing machine, with the parameters of the hot pressing machine set as follows: temperature of 25°C, pressure of 10 t, and time of 30s, followed by pressing to prepare a bonded separator/positive electrode plate sample; and the separator/electrode plate sample was cut into a rectangular sample strip of 150 × 20 mm. The electrode plate side of the rectangular strip was attached to a steel plate via a double-sided adhesive, and the separator was detached from the electrode plate by 2 cm in the length direction at one end of the rectangular strip so as to obtain a test sample.

The steel plate was kept horizontal and fastened via a lower clamp of a universal testing machine (Xie Qiang Instrument Manufacturing (Shanghai) Co., Ltd., model CTM2100), and a peeled end of the separator was fastened via an upper clamp of the same universal testing machine and was connected to a tensile machine. Test conditions were set to a stretching rate of 20 mm/min and a horizontal pull of 10 cm. When the tensile force was stabilized, the value of the tensile force was recorded, and an adhesion between the separator and the electrode plate was obtained as a ratio of the tensile force to the width of the sample.

### 2. EIS data (electrochemical impedance spectroscopy):

A CHI660D electrochemical workstation from Shanghai Chenhua Company was used to apply a small amplitude sine wave voltage signal with frequency W1 to the battery system. This resulted in the generation of a sine wave current response with frequency W2. The variation in the ratio between the excitation voltage and the response current represents the impedance spectrum of the electrochemical system. The AC impedance test was conducted within a frequency range of 10 mHz to 100 kHz, with an amplitude of 5 mV. Through the test, information such as the real and imaginary parts of the impedance at different frequencies could be obtained.

### 3. Cycling performance of lithium-ion battery:

At 25°C, the battery prepared in example 1 was charged to 3.8 V at a constant current of 1/3C, then charged to 0.05C at a constant voltage of 3.8 V, left standing for 5 min, and then discharged to 2.0 V at 1/3C, and a resulting discharge capacity was recorded as an initial capacity C0. The foregoing steps were repeated for the same battery and a discharge capacity Cn of the battery after the n-th cycle was recorded. A battery capacity retention rate after each cycle was Pn = (Cn/C0) × 100%. That is, the battery capacity retention rate after 500 cycles can be used to reflect the difference in the cycling performance.

### 4. Rate performance of lithium-ion battery:

A CT-2001 A LAND battery testing system from Wuhan Jinnuo Electronics was utilized to test the batteries assembled from the prepared electrode materials. The testing was conducted at room temperature of 25°C, with a voltage range of 2.8 V to 4.3 V. The test battery underwent 5 cycles of constant current charge and discharge at different rates: 0.2C, 0.5C, 1C, 2C, 5C, and 0.2C (1C = 200 mAh/g-1). After the first set of 5 cycles at 0.2C, the capacity of the battery was recorded as C1. After the second set of 5 cycles at 0.2C, the capacity was recorded as C2. The rate performance was P = (C2/C1) × 100%.

The test results are shown in Table 2 below:

**Table 2: Performance measurements of examples 1 to 17 and comparative examples 1 and 2**

| | Adhesion data between separator and electrode plate (N/m) | EIS data (Ω) | Cycling performance data of battery (%) | Rate performance of battery (%) |
|---|---|---|---|---|
| Example 1 | 6.28 | 1.443 | 96.5 | 97.0 |
| Example 2 | 6.01 | 1.672 | 94.5 | 95.1 |
| Example 3 | 6.20 | 1.556 | 95.4 | 96.2 |
| Example 4 | 6.27 | 1.498 | 96.2 | 96.7 |
| Example 5 | 6.18 | 1.567 | 95.2 | 96.0 |
| Example 6 | 6.11 | 1.653 | 94.7 | 95.4 |
| Example 7 | 7.81 | 1.208 | 98.1 | 98.4 |
| Example 8 | 7.78 | 1.216 | 98.0 | 98.1 |
| Example 9 | 5.66 | 1.721 | 93.8 | 94.5 |
| Example 10 | 6.29 | 1.435 | 96.6 | 97.0 |
| Example 11 | 6.16 | 1.578 | 95.1 | 95.8 |
| Example 12 | 5.12 | 1.763 | 92.6 | 93.7 |
| Example 13 | 6.32 | 1.421 | 97.1 | 97.3 |
| Example 14 | 6.34 | 1.359 | 97.1 | 97.4 |
| Example 15 | 6.36 | 1.329 | 97.3 | 97.5 |
| Example 16 | 6.37 | 1.308 | 97.4 | 97.5 |
| Example 17 | 6.27 | 1.451 | 96.3 | 96.8 |
| Comparative example 1 | 5.78 | 1.709 | 94.0 | 94.7 |
| Comparative example 2 | 4.86 | 1.836 | 91.9 | 92.6 |

Based on Table 2, a comparison is drawn between the comparative examples and examples. It can be seen from examples 1 to 25 that the binder includes a polyacrylate copolymer, and the resulting binders all have good bonding performance. This makes them suitable for fully utilizing their bonding performance under battery operating conditions, thereby improving the kinetic and safety performance of the battery and in turn improving the cycling capacity retention rate of the battery.

The binder in comparative example 1 contains no lithium, and the particle size of the binder in comparative example 2 exceeds 50 µm. From comparative example 1, it can be learned that the binder without lithium is poor in binder adhesion, battery impedance, cycling performance, and rate performance. From comparative example 2, it can be learned that the binder with a large particle size is poor in both cycling performance and rate performance. Excessive particle size leads to reduced adhesion, affecting cycling and rate performance.

In conclusion, as the binder provided in this application includes a polyacrylate copolymer and a lithium-containing compound, the polymer possesses excellent anti-swelling ability. This also facilitates a good bonding effect, enhances ionic conductivity, and helps control the molecular weight and glass transition temperature of the polymer, and thus improves the bonding performance of the binder. In addition, the binder further including a lithium-containing compound allows the binder to serve as both a binder and a lithium replenisher. This eliminates the need for a separate lithium metal layer or lithium replenishment layer in lithium-ion batteries. Instead, the binder facilitates rapid replenishment of consumed lithium ions in the lithium battery, thereby increasing the ion transfer speed and enhancing structural stability of the lithium-ion battery during cycling. The binder is applied to the separator or electrode plate of the lithium-ion battery, improving kinetic performance of the lithium-ion battery, reducing electrochemical impedance, and thus enhancing both the cycling performance and rate performance of the lithium-ion battery.

The foregoing descriptions are merely preferred embodiments of this invention, which are not therefore limitations on the patent scope of this invention. Persons skilled in the art understand that this invention may have various changes and variations. Any modifications, equivalent replacements, or improvements made without departing from the spirit and principle of this invention shall fall within the patent protection scope of the present invention.

## Claims

1. A binder, **characterized by** comprising a polyacrylate copolymer and a lithium-containing compound.

2. The binder according to claim 1, **characterized in that** monomers of the polyacrylate copolymer comprise acrylate monomers, acrylonitrile monomers, and acrylamide monomers.

3. The binder according to claim 2, **characterized in that** a molar ratio of the acrylate monomers, the acrylonitrile monomers, and the acrylamide monomers is 1:(0.01 to 0.8):(0.01 to 0.15), optionally 1:(0.05 to 0.7):(0.05 to 0.12).

4. The binder according to claim 2 or 3, **characterized in that** the acrylate monomer comprises at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate; and/or
the acrylonitrile monomer comprises at least one of acrylonitrile and methacrylonitrile; and/or
the acrylamide monomer comprises at least one of acrylamide, N-methylolacrylamide, and N-butoxymethacrylamide.

5. The binder according to claim 1, **characterized in that** in the binder, a mass ratio of lithium to the polyacrylate copolymers is 1:(10 to 1000), optionally 1:(100 to 600).

6. The binder according to any one of claims 1 to 5, **characterized in that** the binder has a volumetric median particle size Dᵥ50 ≤ 50 µm, optionally 7-8 µm.

7. A preparation method of binder, **characterized by** comprising:
adding monomers of a polyacrylate copolymer to a first emulsifier solution to obtain a pre-emulsion;
adding an initiator to the pre-emulsion for reaction to obtain a reaction solution; and
adding a lithium-containing substance to the reaction solution to adjust pH value to 7 to 8 and performing filtering to obtain the binder.

8. The preparation method of binder according to claim 7, **characterized in that** in the step of adding monomers of a polyacrylate copolymer to a first emulsifier solution to obtain a pre-emulsion, the monomers of the polyacrylate copolymer comprise acrylate monomers, acrylonitrile monomers, and acrylamide monomers.

9. The preparation method of binder according to claim 8, **characterized in that** a molar ratio of the acrylate monomers, the acrylonitrile monomers, and the acrylamide monomers is 1:(0.01 to 0.8):(0.01 to 0.15), optionally 1:(0.05 to 0.7):(0.05 to 0.12).

10. The preparation method of binder according to claim 8 or 9, **characterized in that** the acrylate monomer comprises at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate; and/or
the acrylonitrile monomer comprises at least one of acrylonitrile and methacrylonitrile; and/or
the acrylamide monomer comprises at least one of acrylamide, N-methylolacrylamide, and N-butoxymethacrylamide.

11. The preparation method of binder according to claim 7, **characterized in that** the step of adding an initiator to the pre-emulsion for reaction to obtain a reaction solution comprises:
under a heated reflux condition, adding the pre-emulsion to a second emulsifier solution and adding the initiator for reaction, to obtain the reaction solution.

12. The preparation method of binder according to any one of claims 7 to 11, **characterized in that** temperature for the reaction is 20°C to 90°C; and/or
duration of the reaction is 20 to 40 min.

13. The preparation method of binder according to any one of claims 7 to 11, **characterized in that** in the step of adding a lithium-containing substance to the reaction solution to adjust pH value to 7 to 8 and performing filtering to obtain the binder,
the lithium-containing substance comprises at least one of lithium hydroxide, lithium oxide, lithium carbonate, and monolithic lithium; and/or,
a mass ratio of lithium to the polyacrylate copolymers is 1:(10 to 1000), optionally 1:(100 to 600).

14. A separator, **characterized by** comprising the binder according to any one of claims 1 to 6 or a binder prepared according to the preparation method of binder according to any one of claims 7 to 13.

15. An electrode plate, **characterized by** comprising the binder according to any one of claims 1 to 6 or a binder prepared according to the preparation method of binder according to any one of claims 7 to 13.

16. An electrode assembly, **characterized by** comprising at least one of the binder according to any one of claims 1 to 6, a binder prepared according to the preparation method of binder according to any one of claims 7 to 13, the separator according to claim 14, and the electrode plate according to claim 15.

17. A battery cell, **characterized by** comprising the electrode assembly according to claim 16.

18. A battery, **characterized by** comprising the battery cell according to claim 17.

19. An electric apparatus, **characterized by** comprising the battery cell according to claim 17 or the battery according to claim 18.
